# EUROPÄISCHE PATENTSCHRIFT

(11) **EP 1 805 541 B1**
(45) Veröffentlichungstag und Bekanntmachung des Hinweises auf die Patenterteilung: **31.10.2012**
(21) Anmeldenummer: 05789551.8
(22) Anmeldetag: 12.09.2005
(51) Int. Cl.: G02B 6/38, G02B 6/42, G02B 7/00

(54) **VORRICHTUNG ZUR JUSTAGE EINER OPTISCHEN FASER ODER EINES OPTISCHEN FASERBÜNDELS**
DEVICE FOR ADJUSTING AN OPTICAL FIBER OR AN OPTICAL FIBER BUNDLE
DISPOSITIF POUR AJUSTER UNE FIBRE OPTIQUE OU UN FAISCEAU DE FIBRES OPTIQUES

(30) Priorität: 29.10.2004 DE 102004052953
(43) Veröffentlichungstag der Anmeldung: 11.07.2007
(73) Patentinhaber: Leica Microsystems CMS GmbH, 35578 Wetzlar (DE)
(72) Erfinder: FEHRER, Dirk-Oliver, 68723 Oftersheim (DE); BIRK, Holger, 74909 Meckesheim (DE)
(74) Vertreter: Ullrich & Naumann
(86) Internationale Anmeldenummer: PCT/DE2005/001592
(87) Internationale Veröffentlichungsnummer: WO 2006/045264

(56) Entgegenhaltungen:
- EP-A- 0 937 961
- DE-A1- 3 608 236
- GB-A- 2 131 908
- US-A- 5 029 791
- US-A- 5 400 674
- US-B1- 6 276 843
- US-B1- 6 498 892

## Beschreibung

Die vorliegende Erfindung betrifft eine Vorrichtung zur Justage einer in einer Hülse gehalten optischen Faser oder eines in einer Hülse gehalten optischen Faserbündels gegenüber einer Kopplungsstelle, mit einer Halteeinrichtung für die Hülse und einem Stellmechanismus zur Positionierung der Hülse in der Halteeinrichtung, wobei der Stellmechanismus mindestens zwei Stellorgane umfasst, die unter unterschiedlichen Winkeln auf die Hülse wirken und durch deren Betätigung die Lage der Hülse und somit der Faser/Fasern gegenüber der Halteeinrichtung veränderbar ist.

Vorrichtungen der gattungsbildenden Art sind aus der Praxis bekannt. Lediglich beispielhaft wird dazu auf die US 6,276,843 B1 verwiesen. Die dort gezeigte Vorrichtung zur Justage einer optischen Faser oder eines optischen Faserbündels umfasst eine ganz besondere Halteeinrichtung, deren Stellmechanismus zur Positionierung der Faser/Fasern in der Halteeinrichtung als Schrauben ausgeführte Stellorgane hat, die am Umfang der Halteeinrichtung unter verschiedenen Winkeln durch die Wandung der Halteeinrichtung hindurch geschraubt sind. Folglich ist es bei der gattungsbildenden Vorrichtung erforderlich, zur Justage der optischen Faser oder des optischen Faserbündels die Halteeinrichtung bzw. die dort vorgesehenen Stellorgane allseitig zu betätigen. Dies erfordert einen ganz erheblichen Bau- und Justageraum, wobei es letztendlich erforderlich ist, die Halteeinrichtung um mindestens einen Winkelbereich von 90° frei betätigen zu können, nämlich durch einen unmittelbaren Zugriff auf die dortigen Stellorgane. Die Vorhaltung eines solchen Bau- und Justageraums ist jedoch insbesondere bei zunehmender Miniaturisierung hinderlich oder gar nicht möglich.

Des Weiteren zeigt die DE 36 08 236 A1 eine Vorrichtung zur Ankopplung einer Lichtwellenleiterfaser um ein optisches Element, das sich in einem Rohr befindet. Ein Stellörgan SE2 wirld über eine Hebelanordnung H2 mit das Rohr.

Der vorliegenden Erfindung liegt daher die Aufgabe zugrunde, eine Vorrichtung zur Justage einer optischen Faser oder eines optischen Faserbündels gegenüber einer Kopplungsstelle derart auszugestalten und weiterzubilden, dass die Justage bei geringem Bau- und Justageraum bei einfacher Konstruktion mühelos möglich ist.

Die voranstehende Aufgabe ist durch eine Vorrichtung mit den Merkmalen des Patentanspruchs 1 gelöst.

in erfindungsgemäßer Weise ist zunächst erkannt worden, dass die unter unterschiedlichen Winkeln wirkenden Stellorgane zur Betätigung von einer Seite her nebeneinander in der Halteeinrichtung anzuordnen sind und dass mindestens eines der Stellorgane über eine Hebelanordnung auf die Hülse wirkt.

Erfindungsgemäß ist weiter erkannt worden, dass bei der gattungsbildenden Vorrichtung das Erfordernis eines allseitigen Zugriffs auf die Vorrichtung, zumindest aber das Erfordernis eines Zugriffs in einem Bereich um mindestens 90° zu der Vorrichtung, problematisch ist und den Bau- und Justageraum unnötig groß gestaltet. Des Weiteren ist erkannt worden, dass es grundsätzlich möglich ist, die unter verschiedenen Winkeln wirkenden Stellorgane zur Betätigung von einer Seite her nebeneinander in der Halteeinrichtung anzuordnen. Dazu ist es erforderlich, dass mindestens eines der Stellorgane über eine Hebelanordnung auf die Hülse wirkt. Mit anderen Worten ist in erfindungsgemäßer Weise die Betätigung in einen Bereich konzentriert, wobei bei der Vorkehrung zweier Stellorgane diese unter unterschiedlichen Winkeln auf die Hülse wirken. Diese unterschiedlichen Wirkwinkel lassen sich dadurch erreichen, dass eines der Stellorgane unmittelbar und das andere mittelbar auf die Hülse wirkt, nämlich über eine Hebelanordnung, so dass die Betätigung insgesamt von einer Seite her durch nebeneinander liegende Stellorgane zu bewerkstelligen ist. Aus der Kombination der voranstehend genannten Merkmale resultiert ein im Vergleich zum Stand der Technik wesentlich kleinerer Bau- und Justageraum, so dass eine Miniaturisierung in erfindungsgemäßer Weise ganz erheblich begünstigt ist.

Grundsätzlich ist es denkbar, dass eine Justage in zwei Freiheitsgraden, Versatz in x-Richtung und y-Richtung, erfolgt. Üblicherweise erfolgt jedoch die Justage in vier Freiheitsgraden, so dass eine Einstellung durch vier voneinander unabhängige Stellorgane erforderlich ist, nämlich Versatz x/y und Winkel x/y. Insoweit ist es erforderlich, dass bei vier Stellorganen zwei der Stellorgane unter einem von den beiden anderen Stellorganen unterschiedlichen Winkel auf die Hülse wirken. Entsprechend ist die Hebelanordnung auszulegen, so dass die Stellorgane nebeneinander anordenbar und somit von einer Seite her bestätigbar sind.

Des Weiteren ist es denkbar, zwei weitere Freiheitsgrade bei der Justage zu berücksichtigen, nämlich in Bezug auf ein Verschiebbarkeit der Hülse in axiale Richtung und in Bezug auf eine Drehung der Hülse. Dazu könnte neben der Hebelanordnung ein Verschiebemechanismus vorgesehen sein, der die Hülse in Längsrichtung verschiebt. Dies könnte beispielsweise über ein Zahngestänge nebst Spindelschraube erfolgen. Die Drehung der Hülse könnte über das Zusammenspiel eines Außengewindes an der Hülse mit einem Innengewinde einer weiteren Führung, die in der Halteeinrichtung angeordnet ist, erfolgen.

Von besonderer Bedeutung ist jedenfalls die Einstellbarkeit in vier Freiheitsgraden, in Bezug auf den Versatz x/y und Winkel x/y, so dass zumindest vier voneinander unabhängige Stellorgane von Vorteil sind. Diese Stellorgane wirken paarweise unter unterschiedlichen Winkeln auf die Hülse, in der das freie Ende der Faser angeordnet ist.

In weiter vorteilhafter Weise liegen die unter verschiedenen Winkeln wirkenden Stellorgane im Wesentlichen in einer gemeinsamen Ebene, so dass sie von einer Seite her unter Reduktion des erforderlichen Justageraums betätigbar sind. Im Rahmen einer solchen Ausgestaltung ist es von weiterem Vorteil, wenn die Halteeinrichtung zumindest im Bereich der Stellorgane als Platte ausgeführt ist, durch die sich die Stellorgane hindurch einerseits unmittelbar zur Hülse hin und andererseits über die Hebelanordnung zur Hülse hin erstrecken.

Entsprechend den voranstehenden Ausführungen liegen nicht nur die unter verschiedenen Winkeln wirkenden Stellorgane, sondern in weiter vorteilhafter Weise sämtliche Stellorgane im Wesentlichen in einer gemeinsamen Ebene, so dass sich der Justageraum abermals ganz erheblich reduziert.

Bei den Stellorganen handelt es sich in vorteilhafter Weise um durch die Halteeinrichtung schraubbare Schrauben, im Konkreten um Feingewinde-Verstellschrauben. Diese Schrauben sind im Wesentlichen parallel zueinander angeordnet und erstrecken sich durch die Halteeinrichtung hindurch in dort eingeschraubter und durch Drehen in ihrer Längsausrichtung verstellbarer Weise.

Die Halteeinrichtung, mittels derer die Hülse gegenüber einer Einkopplungsstelle justierbar ist, kann beispielsweise als Gehäuse ausgeführt sein, wobei sich die Hülse zumindest teilweise mit Spiel durch das Gehäuse hindurch erstrecken. Im Rahmen einer besonders einfachen Ausgestaltung der Halteeinrichtung ist es von Vorteil, wenn diese als die Hülse zumindest teilweise mit Spiel umgebendes Winkelstück ausgeführt ist, wobei dieses Winkelstück eine hinreichend große Längserstreckung aufweist, so dass es die Hülse über ihre Länge hinweg zumindest teilweise umgreift.

Zur Fixierung der Hülse sind besondere Befestigungsmittel vorgesehen, mittels derer die Hülse von der Halteeinrichtung gehalten ist. In konstruktiv einfacher Weise umfassen die Befestigungsmittel mindestens einen die Hülse umgebenden Haltering, wobei es durchaus auch möglich ist, über die Längserstreckung der Halteeinrichtung hinweg zwei oder mehrere Halteringe vorzusehen. Dabei ist zu gewährleisten, dass die Hülse gegenüber der Halteeinrichtung flexibel gehalten ist, so dass eine Verstellung in den jeweiligen Freiheitsgraden über die Stellorgane möglich ist.

Im Konkreten ist die Hülse elastisch gehalten. Zur Realisierung einer solchen elastischen Halterung ist die Hülse mittels einer Feder gegen die Stellorgane und Hebelanordnung oder gegen die Innenwandung des Halterings gedrückt wird, so dass die Bewegbarkeit in den jeweiligen Freiheitsgraden unter Überwindung einer Vorspannung gewährleistet ist. Zur Realisierung der Einstellung durch die Stellorgane, insbesondere in Bezug auf die Beaufschlagung der Faser aus unterschiedlichen Richtungen, ist es von Vorteil, wenn die Hebelanordnung zwischen der Hülse und der Halteeinrichtung einen Kipphebel aufweist. Dieser Kipphebel könnte zumindest teilweise in die Innenwandung der Halteeinrichtung integriert sein. Jedenfalls ist der Kipphebel an bzw. in der Halteeinrichtung schwenkbar gelagert, so dass der Kipphebel durch die Wandung der Halteeinrichtung hindurch beaufschlagbar bzw. in seiner Kippposition verstellbar ist.

An dieser Stelle sein angemerkt, dass sowohl der Kipphebel als auch die Stellorgane an ihren freien Enden, d.h. endseitig, die Betätigung begünstigende Vorkehrungen aufweisen können. So ist es von Vorteil, dort abgerundete Betätigungskuppen vorzusehen, wodurch der reibungsbedingte Verschleiß reduziert ist. Verschleißmindernde Beschichtungen sind applizierbar.

Wie bereits zuvor erwähnt, ist der Kipphebel schwenkbar der Halteeinrichtung zugeordnet. Durch Beaufschlagung mittels eines Stellorgans unter einem durch den Kipphebel definierten Winkel drückt der Kipphebel gegen die Hülse, so dass entsprechend dem jeweiligen Freiheitsgrad eine Einstellung bzw. Justage möglich ist. Im Konkreten hat der Kipphebel einen Eingriffsbereich zum Eingriff für das Betätigungsorgan und einen dazu abgewinkelten Betätigungsbereich zum Drücken gegen die Hülse, wobei der Kipphebel vorzugsweise einen Wirkwinkel von 90° zu der Ebene der Betätigungsorgane bildet. Somit ist es möglich, von einer Seite her alle vier Freiheitsgrade zu bedienen, und zwar bei möglichst kleinem Justageraum.

Sofern insgesamt in vier Freiheitsgraden zu justieren ist, ist es von weiterem Vorteil, wenn die Hebelanordnung zwei axial hintereinander liegende Kipphebel umfasst, die jeweils durch ein Betätigungsorgan unabhängig voneinander beaufschlagbar sind. So kann es sich dabei um den Versatz x und den Winkel x oder um den Versatz y und den Winkel y handeln, so dass jeweils gegenüber den Stellorganen der beiden anderen Freiheitsgrade ein Winkel von 90° in Bezug auf die Betätigung vorliegt. Die beiden Kipphebel sind um die gleiche Achse schwenkbar, wobei es sich dabei in körperlicher Hinsicht um zwei voneinander unabhängige fluchtende Schwenkachsen handeln kann, die als integrale Bestandteile der Halteeinrichtung oder dort eingesetzte Bauteile ausgeführt sein können.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Vorrichtung anhand der Zeichnung zu verweisen. In Verbindung mit der Erläuterung des bevorzugten Ausführungsbeispiels der erfindungsgemäßen Vorrichtung anhand der Zeichnung werden auch im Allgemeinen bevorzugte Ausgestaltung und Weiterbildungen der Lehre erläutert. In der Zeichnung zeigt
- Fig. 1: in einem schematischen Querschnitt ein Ausführungsbeispiel einer erfindungsgemäßen Vorrichtung zur Justage einer in einer Hülse gehaltenen optischen Faser,
- Fig. 2: die Vorrichtung aus Fig. 1 in perspektivischer Seitenansicht,
- Fig. 3: den Gegenstand aus Fig. 2 in perspektivischer Vorderansicht, wobei die Halteeinrichtung zur Verdeutlichung der Hebelanordnung weggebrochen ist und
- Fig. 4: den Gegenstand aus Fig. 3 in einer perspektivischen Seitenansicht ähnlich der Darstellung aus Fig. 2, jedoch ohne Halteeinrichtung.

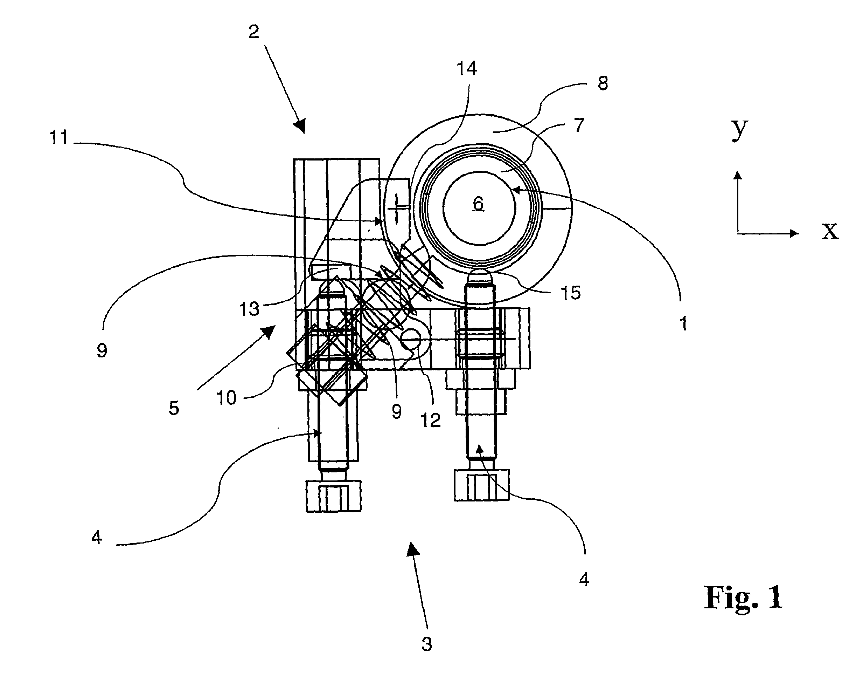

Die Fig. 1 bis 4 zeigen ein Ausführungsbeispiel einer erfindungsgemäßen Vorrichtung zur Justage einer in einer Hülse geheltenen optischen Faser 1, wobei es sich dabei auch um ein Faserbündel handeln kann. Die Justage erfolgt gegenüber einer Kopplungsstelle oder gegenüber einer Baugruppe, die in den Figuren nicht gezeigt ist. So kann es sich dabei im Konkreten um eine Vorrichtung zur Justage einer in einer Hülse geheltenen optischen Faser zum Einkoppeln eines Lichtstrahls in ein Mikroskop handeln.

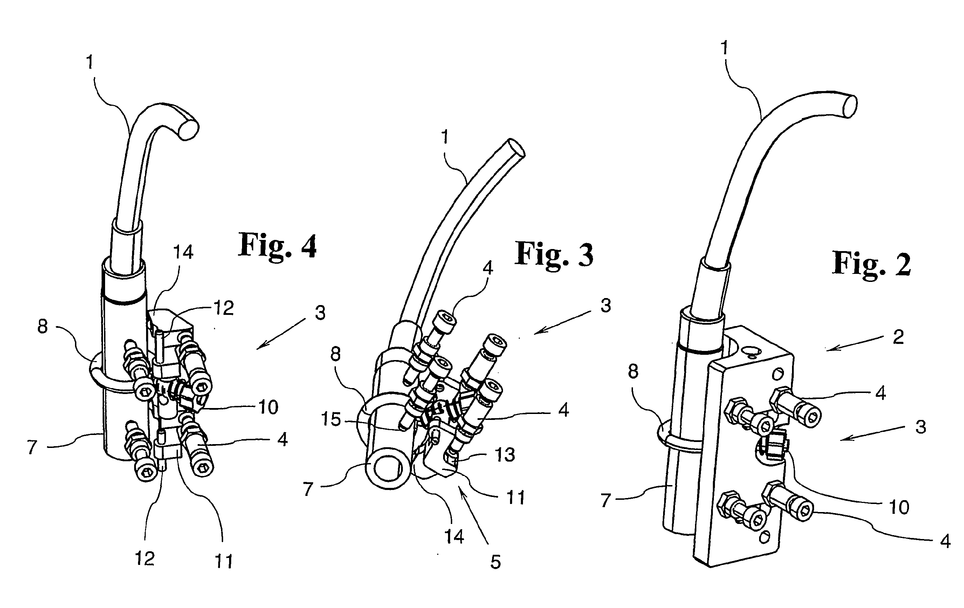

Die Vorrichtung umfasst eine Halteeinrichtung 2, die in den Fig. 1 und 2 besonders gut erkennbar ist. Die Halteeinrichtung 2 dient zur Aufnahme der Faser 1 bzw. zur Aufnahme eines die Faser 1 tragenden Bauteils. Des Weiteren ist ein Stellmechanismus 3 zur Positionierung der Faser 1 in der Halteeinrichtung 2 vorgesehen, wobei der Stellmechanismus 3 bei dem in den Figuren gewählten Ausführungsbeispiel vier Stellorgane 4 umfasst. Die Stellorgane 4 wirken paarweise unter einem Winkel von 90° zueinander, wobei durch deren Betätigung die Lage der Faser 1 gegenüber der Halteeinrichtung 2 veränderbar und somit justierbar ist.

Die paarweise unter einem Winkel von 90° zueinander wirkenden Stellorgane 4 sind zu deren Betätigung von einer Seite her, d.h. unter Vermeidung der Notwendigkeit einer allseitigen Betätigung, nebeneinander in der Halteeinrichtung 2 angeordnet. Zwei der Stellorgane 4 wirken nicht unmittelbar auf die Faser 1 bzw. das die Faser 1 enthaltene Bauteil, sondern über eine Hebelanordnung 5.

In Fig. 1 ist angedeutet, dass die Faser 1 mit ihrem freien Ende 6 in einer Aufnahme gehalten ist, wobei es sich dabei im Konkreten um eine Hülse 7 handelt. Auf die Hülse 7 wirkt der Stellmechanismus 3.

Die Fig. 1 bis 4 zeigen gemeinsam, dass die Einstellung in vier Freiheitsgraden erfolgt, nämlich in Bezug auf den Versatz in x- und y-Richtung in Bezug auf den Winkel in x- und y-Richtung. Dazu sind vier voneinander unabhängige Stellorgane 4 vorgesehen, was sich besonders gut den Fig. 2 bis 4 entnehmen lässt.

Fig. 1 lässt weiter erkennen, dass die Stellorgane 4 paarweise unter verschiedenen Winkeln auf die Hülse 7 und somit auf die Faser 1 wirken. Der Winkelversatz wird durch die Hebelanordnung 5 bewerkstelligt, wenngleich die Stellorgane 4 in einer gemeinsamen Ebene liegen, was sich besonders gut den Fig. 2 bis 4 entnehmen lässt.

Bei den Stellorganen 4 handelt es sich im Konkreten um Feingewinde-Verstellschrauben, die durch die Halteeinrichtung 2 hindurch geschraubt sind und einerseits unmittelbar auf die Hülse 7 und andererseits auf die Hebelanordnung 5 - paarweise - wirken.

Die Fig. 1 bis 4 lassen des Weiteren erkennen, dass die Hülse 7 mittels besonderer Befestigungsmittel in der Halteeinrichtung 2 halten ist, nämlich mittels eines Halterings 8. Gemäß der in Fig. 1 gewählten Darstellung ist die Hülse 7 im Haltering 8 durch Federkraft beaufschlagt, nämlich durch eine sich im Eckbereich durch die Halteeinrichtung 2 hindurch erstreckende Federanordnung 9, die gemäß der Darstellung in Fig. 2 von außerhalb der Halteeinrichtung 2 in ihrer Spann-/Druckkraft veränderbar ist. Dazu ist auf einen Gewindebolzen eine Mutter 10 aufgeschraubt, durch die sich die Federkraft und somit die Anpresskraft, mit der die Hülse 7 innerhalb des Halterings 8 gegen die Stellorgane 4 und gegen die Habelanordnung 5 gedrückt wird, veränderbar ist. Somit ist eine vorgespannte Lagerung der Hülse 7 innerhalb der Halteeinrichtung 2 geschaffen, wodurch die Hülse 7 gegen die Stellorgane 4 und gegen die Hebelanordnung 5 - elastisch bzw. federelastisch - drückbar ist. Eine sichere Positionierung der Hülse 7 ist damit gewährleistet.

Fig. 1 zeigt besonders deutlich, dass die Hebelanordnung 5 einen Kipphebel 11 umfasst, wobei gemäß den Darstellungen in den Fig. 2 bis 4 zwei parallel zueinander bzw. hintereinander angeordnete Kipphebel 11 vorgesehen sind, die um eine gemeinsame Achse 12 schwenkbar sind. Jeder Kipphebel 11 lässt sich durch ein Stellorgan 4 betätigen, wobei dazu der Kipphebel 11 einen Eingriffsbereich 13 zum Eingriff für das Betätigungsorgan bzw. Stellorgan 4 hat. Des Weiteren ist der Kipphebel 11 mit einem abgewinkelten Betätigungsbereich 14 ausgestattet, der zum Drücken gegen die Hülse 7 dient.

Fig. 1 zeigt besonders deutlich, dass die Stellorgane 4 bzw. die als Stellorgane 4 dienenden Feingewinde-Verstellschrauben am freien Ende Betätigungskuppen 15 aufweisen, so dass bei Gleitreibung ein mechanischer Verschleiß erheblich reduziert ist.

Unter Bezugnahme auf die Fig. 2 bis 4 sei des Weiteren angemerkt, dass die als Stellorgane 4 dienenden Schrauben mit Inbus-Köpfen versehen sind, so dass eine Verstellung mittels Inbus-Schlüssel mühelos möglich ist.

Des Weiteren sei angemerkt, dass die Stellorgane bzw. Schrauben bei dem in den Figuren gezeigten Ausführungsbeispiel teilweise unmittelbar und teilweise mittelbar auf die Hülse 7 und somit auf die Faser 1 wirken. Ebenso ist es jedoch auch denkbar, dass das die Faser umfassende Bauteil, d.h. bei dem hier gezeigten Ausführungsbeispiel die Hülse, an deren Oberfläche mechanische Vorkehrungen aufweist, die der Kontur des freien Endes des Stellorgans 4 angepasst sind, so dass eine bessere Ankopplung zur Lageveränderung der Hülse 7 realisiert ist.

Auch sei angemerkt, dass die Halteeinrichtung eine weitere Mimik umfassen kann, mit der die Halteeinrichtung an einem beliebigen Bauteil, Maschinengestell oder dergleichen befestigt werden kann, so dass insoweit eine ortsfeste Anordnung der Halteeinrichtung möglich ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

## Patentansprüche

1. Vorrichtung zur Justage einer in einer Hülse (7) gehaltenen optischen Faser (1) oder eines in einer Hülse (7) gehaltenen optischen Faserbündels gegenüber einer Kopplungsstelle, mit einer Halteeinrichtung (2) für die Hülse (7) und einem Stellmechanismus (3) zur Positionierung der Hülse (7) in der Halteeinrichtung (2), wobei der Stellmechanismus (3) mindestens zwei Stellorgane (4) umfasst, die unter unterschiedlichen Winkeln auf die Hülse (7) wirken und durch deren Betätigung die Lage der Hülse (7) und somit der Faser/Fasern (1) gegenüber der Halteeinrichtung (2) veränderbar ist,
**dadurch gekennzeichnet, dass** die unter verschiedenen Winkeln wirkenden Stellorgane (4) zur Betätigung von einer Seite her nebeneinander in der Halteeinrichtung (2) angeordnet sind, dass mindestens eines der Stellorgane (4) über eine Hebelanordnung (5) auf die Hülse (7) wirkt und dass die Hülse (7) in einem Haltering (8) durch Federkraft beaufschlagt gehalten ist, wobei die Federkraft durch eine sich durch die Halteeinrichtung (2) hindurch erstreckende Federanordnung (9) erzeugt und von außerhalb der Halteeinrichtung (2) veränderbar ist.

2. Vorrichtung nach Anspruch 1, **dadurch gekennzeichnet, dass** zur Einstellung in vier Freiheitsgraden, namlich Versatz x/y und Winkel x/y, vier voneinander unabhängige Stellorgane (4) vorgesehen sind, wobei
die Stellorgane (4) paarweise unter verschiedenen Winkeln auf die Hülse (7) wirken können.

3. Vorrichtung nach Anspruch 1 oder 2, **dadurch gekennzeichnet, dass** die unter verschiedenen Winkeln wirkenden Stellorgane (4) im Wesentlichen in einer gemeinsamen Ebene liegen und/oder
dass sämtliche Stellorgane (4) im Wesentlichen in einer gemeinsamen Ebene liegen.

4. Vorrichtung nach einem der Ansprüche 1 bis 3, **dadurch gekennzeichnet, dass** die Stellorgane (4) durch die Halteeinrichtung (2) schraubbare Schrauben umfassen, wobei
die Schrauben als Feingewinde-Verstellschrauben ausgeführt sein können und/oder wobei
die Schrauben bzw. Stellorgane (4) im Wesentlichen parallel zueinander angeordnet sein können.

5. Vorrichtung nach einem der Ansprüche 1 bis 4, **dadurch gekennzeichnet, dass** die Halteeinrichtung (2) als die Hülse (7) zumindest teilweise mit Spiel aufnehmendes Gehäuse ausgeführt ist oder
dass die Halteeinrichtung (2) als die Hülse (7) zumindest teilweise mit Spiel umgebendes Winkelstück ausgeführt ist.

6. Vorrichtung nach einem der Ansprüche 1 bis 5, **dadurch gekennzeichnet, dass** die Hebelanordnung (5) zwischen der Hülse (7) und der Halteeinrichtung (8) einen Kipphebel (11) aufweist.

7. Vorrichtung nach einem der Ansprüche 1 bis 6, **dadurch gekennzeichnet, dass** die Stellorgane (4) und/oder der Kipphebel (11) endseitige Betätigungskuppen (15) aufweisen und/oder
dass der Kipphebel (11) schwenkbar der Halteeinrichtung (2) zugeordnet ist und durch Beaufschlagung mittels eines Stellorgans (4) unter einem durch den Kipphebel (11) definierten Winkel gegen die Hülse (7) drückt, wobei
der Kipphebel (11) einen Eingriffsbereich (13) zum Eingriff für das Stellorgan (4) und einen dazu abgewinkelten Betätigungsbereich (14) zum Drücken gegen die Hülse (7) haben kann und wobei
der Kipphebel (11) einen Wirkwinkel von vorzugsweise 90° zu der Ebene der Stellorgane (4) definiert.

8. Vorrichtung nach einem der Ansprüche 1 bis 7, **dadurch gekennzeichnet, dass** die Hebelanordnung (5) zwei axial hintereinander liegende Kipphebel (11) umfasst, die jeweils durch ein Stellorgan (4) unabhängig voneinander beaufschlagbar sind, wobei
die Kipphebel (11) vorzugsweise um die gleiche Achse schwenkbar sind.

## Claims

1. Device for adjusting an optical fibre (1) which is retained in a sleeve (7) or an optical fibre bundle which is retained in a sleeve (7) with respect to a coupling location, having a retention device (2) for the sleeve (7) and an adjustment mechanism (3) for positioning the sleeve (7) in the retention device (2), the adjustment mechanism (3) comprising at least two adjustment members (4) which act on the sleeve (7) at different angles and by means of the actuation of which the position of the sleeve (7) and consequently the fibre(s) (1) can be changed with respect to the retention device (2),
**characterised in that** the adjustment members (4) which act at different angles in order to actuate from one side are arranged beside each other in the retention device (2), **in that** at least one of the adjustment members (4) acts on the sleeve (7) via a lever arrangement (5), and **in that** the sleeve (7) is retained in a retention ring (8) so as to be acted upon with resilient force, the resilient force being produced by means of a resilient arrangement (9) which extends through the retention device (2) and being able to be changed from the outer side of the retention device (2).

2. Device according to claim 1, **characterised in that**, in order to adjust in four degrees of freedom, that is to say, offset x/y and angle x/y, four mutually independent adjustment members (4) are provided,
the adjustment members (4) being able to act in pairs on the sleeve (7) at different angles.

3. Device according to claim 1 or claim 2, **characterised in that** the adjustment members (4) which act at different angles are located substantially in a common plane and/or
**in that** all the adjustment members (4) are located substantially in a common plane.

4. Device according to any one of claims 1 to 3, **characterised in that** the adjustment members (4) comprise screws (2) which can be screwed through the retention device (2),
the screws being able to be constructed as fine-pitch thread adjustment screws, and/or
the screws or adjustment members (4) being able to be arranged substantially parallel with each other.

5. Device according to any one of claims 1 to 4, **characterised in that** the retention device (2) is constructed as a housing which receives the sleeve (7) at least partially with play, or
**in that** the retention device (2) is constructed as an angular piece which surrounds the sleeve (7) at least partially with play.

6. Device according to any one of claims 1 to 5, **characterised in that** the lever arrangement (5) has a tilting lever (11) between the sleeve (7) and the retention device (8).

7. Device according to any one of claims 1 to 6, **characterised in that** the adjustment members (4) and/or the tilting lever (11) has/have end-side actuation cambered portions (15) and/or
**in that** the tilting lever (11) is pivotably associated with the retention device (2) and, by being acted upon with an adjustment member (4), presses against the sleeve (7) at an angle defined by the tilting lever (11),
the tilting lever (11) being able to have an engagement region (13) for engagement for the adjustment member (4) and an actuation region (14) which is bent relative thereto for pressing against the sleeve (7) and
the tilting lever (11) defining an effective angle of preferably 90° with respect to the plane of the adjustment members (4).

8. Device according to any one of claims 1 to 7,
**characterised in that** the lever arrangement (5) comprises two tilting levers (11) which are arranged axially one behind the other and which can each be acted on independently of each other by means of an adjustment member (4),
the tilting levers (11) preferably being able to be pivoted about the same axis.

## Revendications

1. Dispositif pour ajuster une fibre optique (1) maintenue dans une gaine (7) ou un faisceau de fibres optiques maintenu dans une gaine (7) par rapport à une zone de couplage, comportant un dispositif de support (2) pour la gaine (7) et un mécanisme de réglage (3) pour le positionnement de la gaine (7) dans le dispositif de support (2), le mécanisme de réglage (3) comportant au moins deux organes de réglage (4) qui agissent sous des angles différents sur la gaine (7) et qui, par leur actionnement, permettent de faire varier la position de la gaine (7) et donc de la fibre ou des fibres (1) par rapport au dispositif de support (2),
**caractérisé en ce que** les organes de réglage (4) agissant sous des angles différents sont agencés les uns à côté des autres dans le dispositif de support (2) pour actionner à partir d'un côté, **en ce qu'**au moins un des organes de réglage (4) agit sur la gaine (7) par l'intermédiaire d'un système de levier (5), et **en ce que** la gaine (7) est maintenue dans une bague de support (8) en étant sollicitée par une force de ressort, la force de ressort étant générée par un système de ressort (9), qui s'étend à travers le dispositif de support (2), et pouvant être variée depuis l'extérieur du dispositif de support (2).

2. Dispositif selon la revendication 1, **caractérisé en ce que** pour le réglage dans quatre degrés de liberté, à savoir le déport x/y et l'angle x/y, il est prévu quatre organes de réglage (4) indépendants les uns des autres, lesdits organes de réglage (4) pouvant agir par paires sous des angles différents sur la gaine (7).

3. Dispositif selon la revendication 1 ou 2, **caractérisé en ce que** les organes de réglage (4) agissant sous des angles différents sont disposés sensiblement dans un plan commun et/ou **en ce que** tous les organes de réglage (4) sont disposés sensiblement dans un plan commun.

4. Dispositif selon l'une quelconque des revendications 1 à 3, **caractérisé en ce que** les organes de réglage (4) comportent des vis à visser à travers le dispositif de support (2), lesdites vis pouvant être réalisées sous forme de vis de réglage avec filetage à pas fin et/ou les vis ou organes de réglage (4) pouvant être agencés sensiblement parallèlement entre eux.

5. Dispositif selon l'une quelconque des revendications 1 à 4, **caractérisé en ce que** le dispositif de support (2) est réalisé sous forme de boîtier recevant la gaine (7) au moins en partie avec un jeu, ou **en ce que** le dispositif de support (2) est réalisé sous forme de cornière entourant la gaine (7) au moins en partie avec un jeu.

6. Dispositif selon l'une quelconque des revendications 1 à 5, **caractérisé en ce que** le système de levier (5) entre la gaine (7) et le dispositif de support (2) comporte un levier basculant (11).

7. Dispositif selon l'une quelconque des revendications 1 à 6, **caractérisé en ce que** les organes de réglage (4) et/ou le levier basculant (11) comportent des calottes d'actionnement (15) du côté des extrémités, et/ou **en ce que** le levier basculant (11) est associé de manière pivotante au dispositif de support (2) et, sous l'effet d'une sollicitation exercée par un organe de réglage (4), pousse contre la gaine (7) sous un angle défini par le levier basculant (11), ledit levier basculant (11) pouvant comporter une zone de contact (13) pour le contact avec l'organe de réglage (4) et une zone d'actionnement (14) coudée par rapport à cette dernière pour pousser contre la gaine (7), et ledit levier basculant (11) définissant un angle d'action de 90° de préférence avec le plan des organes de réglage (4).

8. Dispositif selon l'une quelconque des revendications 1 à 7, **caractérisé en ce que** le système de levier (5) comporte deux leviers basculants (11) situés axialement l'un derrière l'autre et pouvant être sollicités indépendamment l'un de l'autre par un organe de réglage (4), lesdits leviers basculants (11) pouvant pivoter de préférence autour du même axe.
